# FASCICULE DE BREVET EUROPEEN

(11) **EP 4 197 641 B1**
(45) Date de publication et mention de la délivrance du brevet: **15.10.2025**
(21) Numéro de dépôt: 22211236.9
(22) Date de dépôt: 02.12.2022
(51) Int. Cl.: B03C 3/47, B03C 3/60, B03C 3/64, B03C 3/49

(54) **MEMBRANE DE COLLECTE DE PARTICULES AÉROPORTÉES**
MEMBRAN ZUR SAMMLUNG VON LUFTPARTIKELN
AIRBORNE PARTICLE COLLECTION MEMBRANE

(30) Priorité: 17.12.2021 FR 2113751
(43) Date de publication de la demande: 21.06.2023
(73) Titulaire: Commissariat à l'Energie Atomique et aux Energies Alternatives, 75015 Paris (FR)
(72) Inventeur: BLAIRE, Guillaume, 38054 Grenoble cedex 09 (FR); ALESSIO, Manuel, 38054 Grenoble cedex 09 (FR); BAQUE, Mélissa, 38054 Grenoble cedex 09 (FR); ROUX, Jean-Maxime, 38054 Grenoble cedex 09 (FR)
(74) Mandataire: INNOV-GROUP

(56) Documents cités:
- EP-A2- 1 814 137
- EP-B1- 1 112 124
- WO-A1-2015/085054
- US-A1- 2001 021 534
- US-A1- 2005 072 917

## Description

### Domaine technique de l'invention

La présente invention se rapporte à une membrane de collecte de particules aéroportées.

### Etat de la technique

Plusieurs solutions ont déjà été proposées dans l'état de la technique pour collecter des particules présentes dans un aérosol, dans un but d'analyse de ces particules.

Une méthode de séparation connue et particulièrement avantageuse est de type électrostatique. Elle est mise en œuvre dans des collecteurs électrostatiques, aussi appelés précipitateurs électrostatiques ou filtres électrostatiques (ESP pour "*electrostatic precipitator*" en anglais) ou encore appelés électrofiltres.
Il existe plusieurs catégories de collecteurs électrostatiques, parmi lesquelles :
- Les collecteurs électrostatiques dits secs, par exemple décrits dans la demande de brevet WO2015/197747A1,
- Les collecteurs électrostatiques dits humides, par exemple décrits dans la demande de brevet WO2004/041440A1,
- Les collecteurs électrostatiques dits semi-humides, par exemple décrits dans WO2007/012447A1.

Dans toutes ces catégories, les collecteurs comportent une chambre dans laquelle est injecté ou aspiré un flux d'air contenant les particules et génèrent un champ électrique entre deux électrodes, une électrode de décharge et une contre-électrode dite de collecte, qui est en règle générale reliée à la masse. Le champ électrique créé entre les deux électrodes génère un flux d'ions à partir d'une poche de gaz ionisée entourant l'électrode de décharge. Le flux d'air contenant les particules est injecté à travers le flux d'ions. En présence d'ions, les particules acquièrent des charges électriques et deviennent ainsi sensibles au champ électrique généré entre les deux électrodes et sont entraînées par la force électrique vers la contre-électrode.

Dans la première catégorie des collecteurs électrostatiques dits secs, les particules collectées sont décrochées des électrodes de collecte par un procédé sec, par exemple en mettant les électrodes en vibration ou encore par les frottements mécaniques de brosses sur leur surface.

Dans la deuxième catégorie des collecteurs électrostatiques dits humides, les particules capturées sur les électrodes de collecte sont évacuées par ruissellement d'eau sur celles-ci.

Dans la troisième catégorie des collecteurs électrostatiques dits semi-humides, de la vapeur d'eau est introduite dans la chambre contenant l'électrode de décharge ou en amont de celle-ci. Les particules en suspension dans l'air croissent alors par nucléation hétérogène pour former des gouttelettes et lesdites gouttelettes sont précipitées sur la contre-électrode par la force électrique. La vapeur introduite peut en outre condenser sur les parois et ainsi conduire à un ruissellement sur l'électrode de collecte qui contribue à l'évacuation des particules capturées.

La publication référencée "Hyeong Rae Kim, Sanggwon An, and Jungho Hwang, Aerosol-to-Hydrosol Sampling and Simultaneous Enrichment of Airborne Bacteria For Rapid Biosensing, ACS Sens. 2020, 5, 2763-2771*"* décrit un collecteur électrostatique humide destiné à collecter des bio-particules dans un flux d'air. Le flux d'air est injecté dans un canal et passe entre deux électrodes. Les particules sont attirées vers l'électrode de collecte. Un liquide est injecté en continu pour éluer les particules capturées sur l'électrode de collecte. Cette solution qui relève de la catégorie des précipitateurs électrostatiques dits humides nécessite notamment un flux de liquide continu pour éluer les particules présentes sur l'électrode de collecte, ce qui rend la solution peu adaptée pour être facilement mise en œuvre dans un instrument porté ou déployé par exemple, avec un drone. Il existe en effet, en fonctionnement, un risque de voir le liquide d'élution se disperser et s'écouler dans le canal d'air si le dispositif est penché ou bien encore s'il y a des vibrations. Le liquide pourrait également former un pont entre les électrodes si le dispositif était renversé, pouvant entraîner l'apparition d'un court-circuit entre les deux électrodes. Le même problème est posé d'une façon générale par les précipitateurs électrostatiques humides et semi humides comme par exemple dans les solutions techniques décrites dans les brevets WO2004/041440A1 et WO2007/012447A1 précités.

Dans la demande de brevet EP4015087A1**,** il a été proposé d'utiliser une membrane de collecte hydrophile. Par son caractère hydrophile, la membrane est capable de drainer un liquide par capillarité et évite ainsi le risque de dispersion du liquide si le dispositif est penché ou subit des secousses pendant son fonctionnement. La membrane se présente sous la forme d'une bande de matière souple. Elle est fabriquée dans un matériau fibreux ou alvéolé, pouvant drainer un liquide. Dans cette demande de brevet, la membrane est réalisée dans un matériau à base de cellulose (par exemple papier filtre ou équivalent), dans un matériau de type tissu à caractère hydrophile, de type mousse (éponge) ou de type fibre de verre. Cette membrane n'était cependant pas conçue pour jouer également le rôle d'électrode de collecte.

Le brevet EP1112124B1 décrit pour sa part une membrane de collecte destinée à être employée dans un collecteur électrostatique pouvant être sec ou humide.

Le brevet EP1112124B1 décrit un collecteur électrostatique fondé sur l'emploi original d'une membrane faite de fibres entrelacées qui peuvent être faite de céramique, de métaux ou d'alliages métalliques, de carbone. La solution technique est intéressante mais sa mise en œuvre dans un collecteur d'aérosols en vue d'analyses biologiques pose un certain nombre de problèmes. En effet tous les matériaux employés doivent répondre à des critères de compatibilité avec les différentes techniques d'analyse biologique, rendant leur choix non trivial.

De nombreux brevets tels que EP1112124B1 décrivent l'emploi de matériaux métalliques ou d'alliage métalliques. Mais de nombreux métaux inhibent les analyses biomoléculaires. L'aluminium par exemple est un inhibiteur de ces réactions. Par ailleurs il convient de pouvoir conserver les microorganismes cultivables en vue d'analyses par culture, or des métaux comme le cuivre ou l'argent ont des propriétés désinfectantes. Une solution intéressante est l'emploi de matériaux conducteurs non métalliques comme le carbone ou comme des polymères, pourvu qu'ils soient conducteurs et que leurs composants n'interagissent pas avec les réactions d'analyses biologiques. Les matériaux à base de PEDOT par exemple sont des matériaux polymères conducteurs intéressants, souvent décrits dans la littérature mais leur emploi pour des analyses biologiques n'est pas trivial. En effet, les solvants employés lors de leur préparation doivent être éliminés par des procédés spécifiques de façon à pouvoir être exploitable dans un collecteur destiné aux analyses biologiques. Enfin les matériaux à base de carbone et des polymères conducteurs sont hydrophobes et ne répondent pas au critère d'hydrophilie, nécessaire pour que la solution de rinçage de la membrane pénètre celle-ci correctement. La matrice silicone décrite par le brevet EP1112124B1 est également par nature hydrophobe. Si un rinçage à l'eau est toujours possible pour nettoyer la membrane peu importe que son matériau soit hydrophile ou non, un problème provient de la quantité d'eau nécessaire en vue d'analyses biologiques. Dans ce contexte d'emploi, les volumes employés doivent être minimisés et si possible inférieurs à 5ml avec un volume préféré inférieur à 300µl/cm². De plus si la membrane est hydrophobe le rinçage sera moins efficace du fait des interactions surfaciques entre la couche hydrophobe et les particules collectées. Un traitement de surface de ces matériaux doit donc être entrepris, qui lui aussi doit être compatible avec les analyses ultérieures qui pourront être effectuées sur l'échantillon collecté.

Un problème supplémentaire se pose avec les procédés décrits dans les brevets US20040083790A1**,** US20080295687A1**,** US20100000540A1 qui s'appuient sur des précipitateurs électrostatiques humides ou semi-humides, les molécules oxydantes formées par les décharges électriques employées pour le procédé de collecte conduisant, en présence d'eau, à la formation de peroxyde d'hydrogène dissous (J-M. Roux, A. Rongier, D. Jary, Importance of the substrate nature to preserve microorganisms' cultivability in electrostatic air samplers, Journal of Physics: Conference Series, 646(1), (2015), 012039*).* Le peroxyde d'hydrogène est en effet un puissant oxydant qui tue tous les microorganismes collectés, interdisant leur analyse par culture y compris les spores de bactéries pourtant parmi les microorganismes les plus résistants. Il s'agit, de plus, d'un composé relativement stable qui risque d'inhiber les réactions biochimiques mises en œuvre pour les analyses.

Le but de l'invention est de proposer une solution de type membrane, capable à la fois de jouer le rôle d'électrode de collecte des particules aéroportées et celui de support d'élution, sans inhiber les réactions biochimiques qui peuvent être mises en œuvre pour l'analyse des bioaérosols. La solution serait à même de contribuer à la collecte des particules et à leur élution en vue d'une analyse avec un taux de récupération supérieur à 50% et une forte concentration des particules dans le liquide élué.

Dans le cadre d'une collecte électrostatique et d'une élution intégrée au sein d'un même composant, une telle membrane doit en effet assurer l'étape clé qu'est le passage air/liquide des particules afin de garantir un bon déroulement de la suite de la chaine analytique.

### Exposé de l'invention

Ce but est atteint par membrane de collecte de particules aéroportées, ladite membrane se présentant sous la forme d'une bande composée de :
- Une matrice formée d'un mélange d'un matériau polymère et d'une charge réalisée dans un matériau conducteur de l'électricité,
- Une couche hydrophile de collecte des particules sur laquelle est déposée ladite matrice de manière à former au moins une couche de matériau composite,
- Ladite membrane comportant au moins une zone obtenue par un traitement de surface de ladite couche hydrophile.

Selon une réalisation particulière, la couche hydrophile est réalisée à base de cellulose. Selon une autre réalisation particulière, la couche hydrophile est réalisée à base d'un matériau tissé.

Selon une particularité, la couche hydrophile est réalisée à base d'un matériau qui retient par capillarité un volume inférieur à 30µl/cm².

Selon une particularité, la matrice est réalisée dans un matériau à base de silicone.

Selon une réalisation particulière, la charge se présente sous la forme d'une poudre de carbone, mélangée à ladite matrice.

Selon une autre réalisation particulière, la charge se présente sous la forme d'une poudre de carbone sous sa forme graphite.

Selon une réalisation particulière, la couche hydrophile présente une surface totale et comporte au moins une première zone dite de collecte obtenue par ledit traitement de surface sur une première partie de sa surface totale et au moins une deuxième zone réalisée sur une deuxième partie de sa surface totale, la première couche ayant une première épaisseur sur sa zone de collecte et une deuxième épaisseur sur sa deuxième zone, ladite première épaisseur étant inférieure à la deuxième épaisseur.

Selon une particularité, la couche hydrophile est traitée pour former une zone de reprise de contact électrique de surface inférieure à sa surface totale, obtenue par ledit traitement de surface de ladite couche hydrophile sur une épaisseur égale à son épaisseur totale.

Selon une autre particularité, la deuxième zone est une zone dite de mouillage, plus hydrophile que la première zone de collecte.

Selon une autre particularité, la zone de mouillage est réalisée sans traitement de surface de ladite couche hydrophile.

Selon une autre particularité, la membrane comporte une zone barrière hydrophobe réalisée entre la zone reprise de contact et la zone de mouillage.

Selon une autre particularité, la zone barrière hydrophobe est réalisée sous la forme d'un dépôt de paraffine.

Selon une autre réalisation, la membrane comporte une autre zone, dite zone terminale située à l'opposé de la zone de mouillage par rapport à la zone de collecte, et obtenue sans traitement de surface de la couche hydrophile.

Selon une autre particularité, la membrane comporte une couche hydrosoluble déposée sur la couche hydrophile.

L'invention concerne également un procédé de fabrication de la membrane de collecte telle que définie ci-dessus, le procédé comportant des étapes de :
- Formation d'un support formé de ladite couche hydrophile,
- Dépôt sur ledit support de la matrice formée d'un mélange du matériau polymère et de la charge réalisée dans le matériau conducteur de l'électricité,
- Polymérisation du matériau polymère,
- Traitement de surface de la couche de matériau hydrophile, afin de former ladite zone.

L'invention concerne également un collecteur électrostatique de particules aéroportées, comprenant une unité de collecte, des moyens de collecte configurés pour forcer lesdites particules aéroportées vers ladite unité de collecte, l'unité de collecte intégrant une membrane de collecte telle que celle définie ci-dessus.

Selon une particularité, le collecteur électrostatique comporte un circuit fluidique d'élution des particules aéroportées collectées par la membrane de collecte, ledit circuit fluidique d'élution comportant au moins un canal fluidique débouchant sur ladite membrane de collecte.

Selon une particularité, le collecteur électrostatique comporte un composant dans lequel est réalisé un canal de collecte des particules, la membrane de collecte étant agencée pour tapisser au moins partiellement ledit canal de collecte.

Selon une autre particularité, la membrane de collecte comporte :
- Au moins une première zone dite de collecte obtenue par ledit traitement de surface sur une première partie de sa surface totale,
- Au moins une deuxième zone, dite de mouillage, plus hydrophile que la première zone de collecte,
- Une zone de reprise de contact électrique, obtenue par ledit traitement de surface de ladite couche hydrophile sur une épaisseur égale à son épaisseur totale,
- Une zone dite terminale située à l'opposé de la zone de mouillage par rapport à la zone de collecte,
- La membrane de collecte étant comprimée de manière partielle au niveau de sa zone de mouillage et de sa zone terminale entre deux plaques du composant assemblées entre elles pour former ledit canal de collecte.

Dans l'invention, l'absence d'eau lors de la capture des particules aéroportés garantit l'absence de composés chimiques (H₂O₂,..) persistant qui pourrait inhiber les réactions d'analyse biologique qui pourraient être mises en œuvre. Il est donc préférable d'employer un procédé de collecte à sec, tout en trouvant une solution pour décrocher avec un bon rendement les particules collectées du support de collecte. La collecte électrostatique conduit en effet les particules à adhérer fortement aux électrodes de collecte et c'est pourquoi, en l'absence d'eau ruisselant en permanence, les électrodes doivent être frottées ou grattées mécaniquement comme décrit dans le brevet EP1112124B1**.** Cette étape de frottage ou grattage est difficilement intégrable.

### Brève description des figures

D'autres caractéristiques et avantages vont apparaître dans la description détaillée qui suit faite en regard des dessins annexés dans lesquels :
- La figure 1 illustre le principe de fonctionnement d'un collecteur électrostatique utilisant une membrane de collecte conforme à l'invention ;
- La figure 2 montre illustre le principe de fabrication de la membrane de collecte de l'invention ;
- La figure 3 montre en vue de dessus la membrane de collecte, selon une première variante de réalisation ;
- La figure 4 montre en vue de dessus la membrane de collecte, selon une deuxième variante de réalisation ;
- La figure 5A illustre le principe de positionnement de la membrane de collecte de la figure 4 dans un collecteur électrostatique ;
- La figure 5B illustre le principe d'écoulement du liquide dans la membrane, selon son agencement de la figure 5A ;

### Description détaillée d'au moins un mode de réalisation

L'invention vise une membrane M de collecte destinée à être employée dans un collecteur électrostatique 1 de particules P aéroportées.

Les particules P peuvent être des micro-particules ou des nano-particules présentes dans l'air sous forme d'aérosols.

De manière non limitative, la collecte des particules P peut notamment être réalisée dans l'air ambiant ou dans l'air expiré par un être vivant. Dans la suite de la description, on considérera que la collecte des particules est réalisée dans l'air ambiant.

L'un des objectifs est d'analyser les particules P en vue de détecter la présence d'un agent pathogène ou une trace de sa présence, par analyse des particules collectées. Les agents pathogènes recherchés peuvent être, entre autres, des microorganismes tels que des virus, des bactéries, des spores fongiques, ou des toxines, des mycotoxines, des allergènes, ou encore tout autre agent nuisible.

Les particules sont avantageusement collectées dans un but d'analyse. L'analyse peut consister à détecter la présence d'ADN, d'ARN, de protéines, d'éléments composants l'agent pathogène, tels que lipides ou glucides, d'un ou plusieurs agents pathogènes présents dans les particules collectées. L'analyse peut également consister à détecter des molécules telles que l'ATP ou encore des sucres tels que le mannitol, l'arabitol et le glucose qui renseignent sur la présence de microorganismes. L'analyse peut aussi porter sur la détection de molécules telles que des allergènes et des mycotoxines.

A titre d'exemple, la méthode d'analyse peut être de type amplification biomoléculaire (par exemple de type LAMP, RPA, PCR,...) ou de type immuno-enzymatique (par exemple type ELISA).

Le collecteur pourra notamment être employé sous la forme d'une balise de surveillance. Pour cela, il devra alors présenter une certaine autonomie de fonctionnement, c'est-à-dire pouvoir collecter et analyser les particules, avec un minimum d'intervention extérieure et notamment sans manipulation entre la phase de collecte et la phase d'analyse.

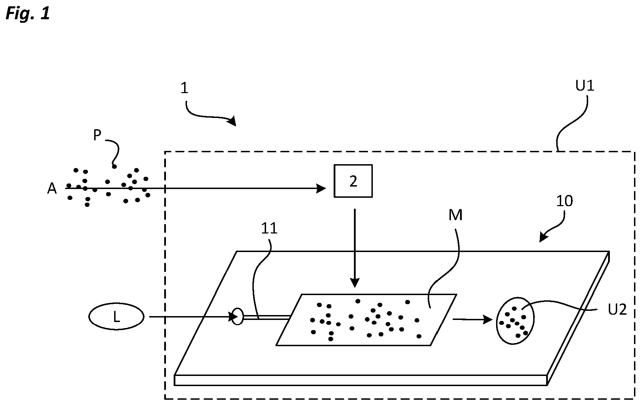

La figure 1 illustre le principe de fonctionnement d'un collecteur électrostatique 1 employant une membrane M de collecte telle que celle de l'invention.

Le collecteur peut intégrer une unité de collecte U1 de particules et une unité d'analyse U2 des particules collectées. L'architecture décrite ci-dessous et représentée sur la figure 1 est à considérer de manière non limitative.

L'unité de collecte U1 de particules comporte un composant 10 principal de collecte.

A titre d'exemple, le composant 10 de collecte peut être réalisé dans un matériau de type COP/COC (Cyclo Oléfin Polymère/Cyclo Olefin Copolymère), polycarbonate ou de type PMMA (Poly-méthacrylate de Méthyle). Il peut notamment présenter des caractéristiques de transparence, suffisantes pour une lecture optique lorsque l'analyse est mise en œuvre directement dans l'unité d'analyse U2 du composant 10.

Le composant 10 fonctionne par effet électrostatique. Il comporte deux électrodes, une électrode de décharge et une contre-électrode dite de collecte, qui est en règle générale reliée à la masse. Les deux électrodes sont reliées chacune à une borne distincte d'une source d'alimentation électrique et sont éloignées l'une de l'autre de manière à créer un champ électrostatique suffisant pour attirer les particules aéroportées vers l'électrode de collecte, afin d'être captées et piégées au niveau de cette électrode de collecte.

L'électrode de collecte est formée par la membrane M de collecte de l'invention. L'unité de collecte U1 est arrangée sur une paroi dédiée du composant 10 et porte la membrane M de collecte de l'invention, en vue de collecter les particules P.

Le composant 10 peut notamment comporter une chambre dans laquelle est injecté ou aspiré un flux d'air contenant les particules. Des moyens de collecte 2, qui peuvent être générateurs du flux d'air, sont configurés pour diriger les particules présentes dans l'air vers la membrane M de collecte. Le composant 10 peut notamment comporter un canal interne de collecte à travers lequel circule l'air à analyser. La circulation de l'air à travers le canal peut être forcée (par exemple à l'aide d'un ventilateur) ou non. La membrane M de collecte est agencée pour venir tapisser au moins partiellement la surface interne du canal de collecte, de manière à ce que les particules présentes dans le flux d'air injecté dans le canal puissent être exposées au champ électrostatique créé.

Le composant 10 peut avantageusement intégrer un circuit fluidique, dit circuit fluidique d'élution. Ce circuit fluidique d'élution comporte avantageusement un premier canal fluidique 11 débouchant vers la membrane M de collecte, en vue de pouvoir déverser le liquide d'élution L sur la membrane.

Le circuit fluidique d'élution peut également comporter un réceptacle pour réceptionner le liquide d'élution L drainé par la membrane M et transportant les particules P.

Le liquide d'élution L est par exemple l'eau.

Par capillarité, le liquide L assure le mouillage de toute la surface de la membrane M et entraine avec lui les particules précédemment collectés.

L'unité d'analyse U2 des particules P collectées peut être implantée dans le composant 10 employé pour la collecte, comme présenté sur la figure 1, ou être séparée de celui-ci. Elle est avantageusement implantée dans le composant 10 pour réduire le matériel qu'un opérateur devrait manipuler et pour permettre d'automatiser le process. L'unité d'analyse U2 peut comporter une chambre de détection réalisée dans le composant 10 et destinée à recevoir l'échantillon collecté après élution. Cette chambre de détection peut être formée directement du réceptacle de récupération du liquide L après élution.

Cette chambre de détection peut embarquer des réactifs nécessaires à l'analyse, par exemple pour mettre en œuvre une réaction d'amplification biomoléculaire.

Comme évoqué précédemment, l'analyse peut être réalisée par amplification biomoléculaire ou être de type immuno-enzymatique (type ELISA) ou encore de type immunochromatographique (type LFA).

Une analyse par amplification biomoléculaire de microorganismes suppose une extraction du matériel génomique des microorganismes. Trois solutions techniques peuvent être mises en œuvre :
- Entrainer les microorganismes avec une première solution liquide qui mouille la membrane de collecte, récupérer cette solution contenant les particules dans un réservoir ou une chambre réceptacle puis les lyser de manière mécanique ou thermique ou chimique dans celui-ci ou dans une autre chambre du dispositif.
- Mouiller la membrane avec une solution liquide de lyse par voie chimique qui extrait le matériel génétique des microorganismes par voie chimique. Cette solution liquide va en outre entrainer le matériel génétique d'intérêt et celui-ci va être récupéré dans un réservoir ou une chambre réceptacle.
- Chauffer la membrane à une température adaptée à la lyse des microorganismes recherchés (par exemple, 65°C pendant 5 minutes). L'élution du matériel génétique peut ensuite être réalisée dans un second temps, vers un réservoir ou une chambre réceptacle.

Selon l'invention, la membrane M de collecte est conçue pour assurer :
- Le rôle d'électrode de collecte ;
- Le rôle de support de collecte des particules aéroportées P et de piégeage des particules aéroportées ;
- Le rôle de support d'élution afin de faciliter la récupération des particules P collectées en vue de leur analyse sans risque de dispersion du liquide si le dispositif est penché ou s'il est secoué ou encore s'il vibre ;

La membrane M est également conçue avec des matériaux compatibles aux réactions d'analyse pouvant être mises en œuvre et listées ci-dessus.

Par membrane, on entend une bande composée d'une ou plusieurs couches de matière présentant une épaisseur faible (quelques micromètres à quelques millimètres) au regard de sa longueur et de sa largeur.

Selon l'invention, la membrane M se présente sous une forme composite, à partir de :
- Une couche hydrophile 3 de collecte des particules ;
- Une matrice 40 réalisée à partir d'un mélange d'un matériau polymère et d'une charge 41 réalisée dans un matériau conducteur de l'électricité ;

Par caractère hydrophile, on entend que la couche hydrophile 3 est capable de drainer un liquide L, par exemple un liquide tel que l'eau, par capillarité. Pour rappel, on définit la mouillabilité d'un matériau en observant l'angle de contact (le plus souvent noté α) qu'a ce dernier avec une goutte d'eau :
- Lorsque cet angle (aussi appelé angle de contact, ou angle de raccordement) est inférieur à 90°, la surface est dite plus ou moins hydrophile (la surface de contact entre l'eau et le matériau est élevé) ;
- Lorsqu'il est supérieur à 90°, la surface est dite plus ou moins hydrophobe (la surface de contact entre l'eau et le matériau est faible) ;

Dans le cas de l'invention, par caractère hydrophile, on entend que la couche hydrophile présente avantageusement un angle de contact inférieur à 75° après une durée très courte inférieure à quelques secondes, par exemple de 5 secondes. Par ailleurs, dans la zone de collecte de la membrane, cet angle de contact décroît ensuite très rapidement jusqu'à être inférieur à 50°, l'eau pénétrant très rapidement dans le matériau. Elle présente donc un caractère très hydrophile.

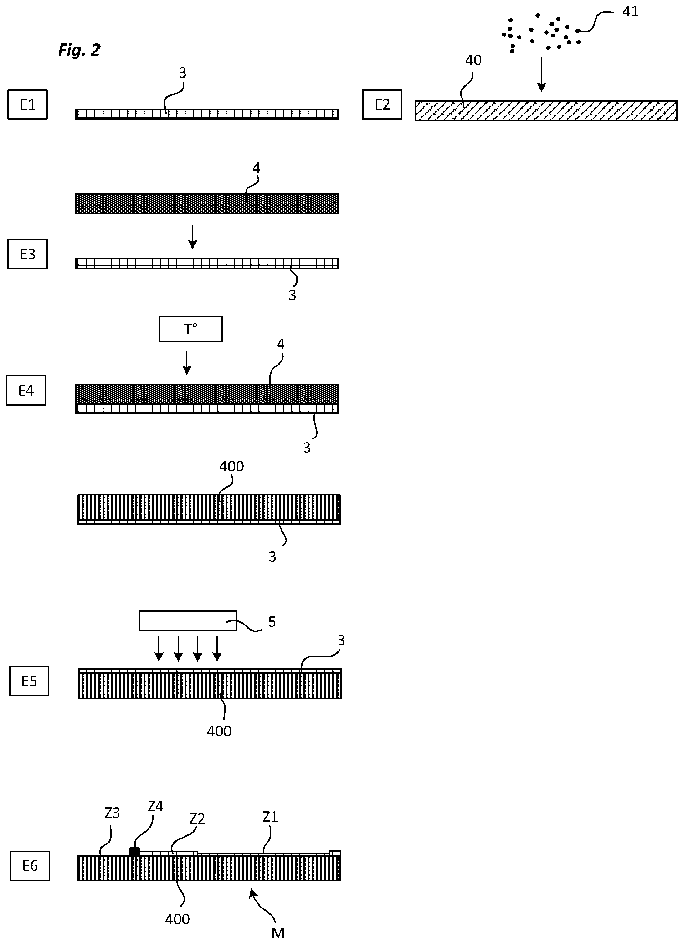

De manière non limitative, les différentes étapes de fabrication de la membrane sont illustrées par la figure 2 et décrites ci-dessous.

Etape E1 : La couche hydrophile 3 est employée comme support de la matrice 40 dans le procédé de fabrication.

La couche hydrophile 3 comporte avantageusement des fibres entrelacées, lesdites fibres définissant entre elles des interstices par lesquels le liquide peut s'écouler lors de l'élution.

De manière avantageuse, la couche hydrophile 3 peut être fabriquée dans un matériau fibreux ou alvéolée, pouvant drainer un liquide tel que l'eau. A titre d'exemple, elle peut être réalisée dans un matériau à base de cellulose (par exemple papier filtre ou équivalent), dans un matériau de type tissu à caractère hydrophile, de type mousse (éponge) ou de type fibre de verre.

A titre d'exemple, la couche hydrophile 3 est par exemple composée de papier type Whatman (marque déposée).

De façon à minimiser les volumes employés et ainsi augmenter la concentration en solution des particules collectées et éluées, l'épaisseur de la membrane est choisie de façon à retenir par capillarité un volume inférieur à 30 µl/cm².

Etape E2 : Une deuxième couche 4 est fabriquée. Cette deuxième couche 4 est composée d'un mélange d'une matrice 40 réalisée en matériau polymère et d'une charge 41 réalisée dans un matériau conducteur de l'électricité. La charge 41 est ajoutée à la matrice afin de conférer à la membrane son caractère conducteur.

De manière non limitative, la matrice 40 peut être réalisée à base de silicone et la charge 41 peut être de la poudre de carbone. Le carbone et le silicone ainsi que le couple carbone/silicone présentent l'avantage d'être inertes vis-à-vis des réactions biochimiques. Le matériau composite formé n'est donc pas susceptible d'inhiber ces réactions. Bien entendu, d'autres matériaux présentant de telle propriétés vis-à-vis des réactions biochimiques pourraient être envisagées.

De manière avantageuse, le carbone sous forme graphite est ajouté à la matrice de silicone dans un pourcentage en masse compris entre 30% et 50%. La concentration en charge doit être choisie suffisante pour obtenir une bonne conductivité électrique, sans réduire la tenue mécanique du matériau obtenu et notamment le piégeage de la poudre incorporée par la matrice (par exemple à base de silicone).

Cette deuxième couche présente une forme liquide, pâteuse et visqueuse, facilitant sa mise en forme et son dépôt avant polymérisation.

Etape E3 : La deuxième couche 4 est déposée sur la couche hydrophile 3, par exemple formée de papier (voir ci-dessus). Il faut noter que la couche hydrophile 3 est avantageusement choisie avec une surface suffisamment rugueuse et/ou poreuse, afin de mieux accrocher le mélange.

Avantageusement, la deuxième couche 4 est déposée sur la première couche 3 à une épaisseur constante sur l'ensemble de la première couche 3.

Etape E4 : L'ensemble multicouches est ensuite mis en conditions pour polymérisation de la matrice (T°). Par exemple, dans le cas d'une membrane à base de silicone, l'ensemble multicouches peut être chauffé à 60°C pendant 3 heures.

Lors de la polymérisation, la deuxième couche 4 vient imprégner la couche hydrophile 3, formant le matériau composite 400. Comme on peut le voir sur la figure 2, une fine couche hydrophile 3 reste en surface.

Si l'épaisseur de la première couche hydrophile 3 restante est suffisamment faible, typiquement moins de 100µm, la membrane M peut être utilisée telle quelle dans un collecteur. La couche 3, qui est hydrophile, est placée dans le collecteur en contact avec l'air et sur la trajectoire du flux d'air, et donc sur la trajectoire des particules P à collecter. Les particules vont être attirées par la couche 4 conductrice polarisée et se déposer sur la couche hydrophile 3 de la membrane M sur laquelle elles seront capturées, éventuellement à l'intérieur de la première couche si celle-ci présente une porosité suffisante.

Si la couche hydrophile 3 possède une structure tridimensionnelle (formant ainsi des alvéoles et une couche suffisamment poreuse), comme par exemple du papier, le liquide L d'élution des particules P collectées va pénétrer l'intégralité de l'épaisseur de la couche hydrophile 3. Cette "capillarité en volume" est beaucoup plus efficace pour guider le liquide L dans tout le support. L'ensemble des particules P capturées est alors entrainé par le liquide L d'élution, augmentant le rendement d'élution. Le liquide portant les particules peut être récupéré dans un réceptacle dédié placé en aval.

Le liquide L d'élution est avantageusement l'eau. Il peut contenir avantageusement un tensio-actif tel que par exemple du TritonX100 et des protéines tel que par exemple la BSA ou la caséine pour augmenter le mouillage de la membrane, bloquer les interactions protéines/surface et accroitre le rendement de récupération des particules collectées.

Il se peut également que la couche 3 restante dispose d'une épaisseur trop élevée, venant ainsi limiter le rendement de collecte. Dans ce cas, de manière avantageuse, une étape de fabrication de la membrane M consiste créer une ou plusieurs zones sur la membrane, par traitement de la couche hydrophile.

Etape E5 : Le traitement de surface peut consister en une gravure de la couche hydrophile 3 encore présente (moyens de gravure 5), par exemple par gravure laser, fraisage ou encore par création de zones à l'aide de barrières faites par exemple de paraffine. Les opérations de gravure peuvent être réalisées sur une épaisseur plus ou moins importante de l'épaisseur totale de la couche hydrophile, ceci afin de pouvoir définir une ou plusieurs zones.

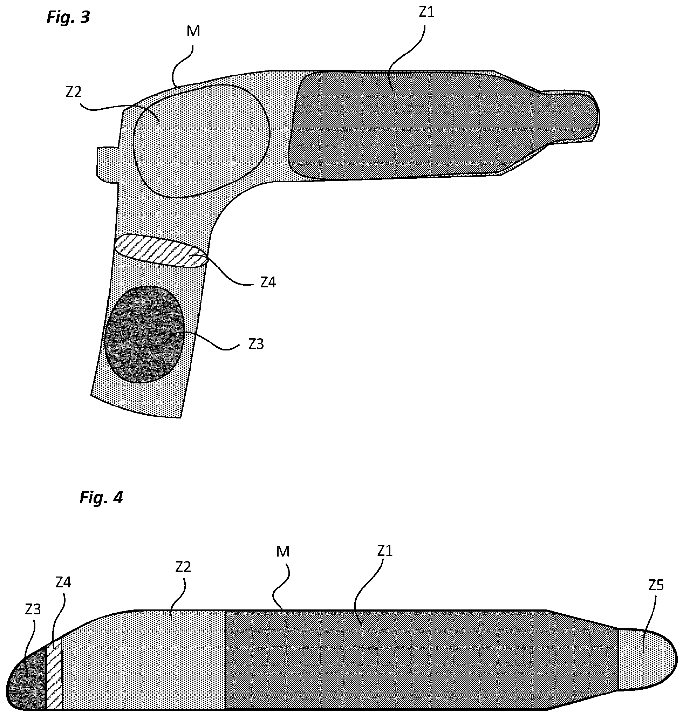

Etape E6 : La membrane M est obtenue avec par exemple différentes zones distinctes. Ces différentes zones obtenues sont par exemple représentées sur la figure 3 et sur la figure 4 :
- Une zone dite de collecte Z1 où la couche hydrophile 3 est partiellement gravée ;
- Une zone dite de mouillage Z2 au niveau de laquelle la couche hydrophile 3 n'est pas gravée, ou gravée sur une épaisseur moindre que celle de la zone de collecte Z1 ;

De manière avantageuse, il est également possible de créer sur la membrane M :
- Une zone de reprise de contact Z3, dans laquelle la couche hydrophile 3 est retirée sur toute son épaisseur, de manière à créer un accès à la deuxième couche 4 située au-dessous ;
- Une ou plusieurs zones barrières Z4, agencées entre la zone de mouillage Z2 et la zone de reprise de contact Z3 pour guider le liquide d'élution L et empêcher celui-ci de migrer vers la zone de contact Z3 ;
- Une zone terminale Z5, par laquelle le liquide drainé quitte la membrane pour aller vers l'unité d'analyse U2. Sur cette zone Z5, la couche hydrophile 3 n'est avantageusement pas gravée. Elle possède donc une bonne porosité.

Les différentes zones peuvent être réalisées sur une même membrane M et occuper toute ou partie de la surface totale de la membrane M. La zone de collecte Z1 peut notamment être plus ou moins étendue.

La zone de collecte Z1 est obtenue par gravure sur une épaisseur de la couche hydrophile 3, inférieure à son épaisseur totale, en vue d'obtenir une zone ayant un compromis entre caractéristiques de mouillabilité et qualité de capture des particules P par forces électrostatiques.

La zone de mouillage Z2 est la zone par laquelle le liquide d'élution L est introduit pour la récupération des particules P collectées. Elle permet d'assurer la répartition du front d'élution sur toute la largeur de la membrane, évitant des chemins d'écoulement préférentiels, et un écoulement régulier du liquide d'élution L. Par capillarité, le liquide L introduit par la zone de mouillage Z2 assure le mouillage de toute la surface de la membrane M, au moins au niveau de sa zone de collecte Z1, et entraine avec lui les particules précédemment collectés. Le liquide L emporte les particules P et est avantageusement récupéré dans un réceptacle dédié.

La zone de reprise de contact Z3 peut également être employée comme zone de confinement du liquide d'élution L, la deuxième couche 4 étant hydrophobe.

Chaque zone barrière Z4 peut être formée par dépôt d'une couche de paraffine sur la surface de la membrane M. Une zone barrière est configurée pour faire barrière au liquide L entre deux zones distinctes de la membrane.

La zone terminale Z5 est destinée à :
∘ Ralentir l'écoulement fluidique en sortie de la zone Z1 de la membrane ;
∘ Forcer le liquide à s'écouler sans chemin préférentiel et sous forme de film ;
∘ Servir de zone de plaquage de la membrane dans son logement ;

Il est également possible d'ajouter sur la couche hydrophile 3, gravée ou non, un agent hydrosoluble destiné à favoriser l'élution des particules collectées. A titre d'exemple, la couche hydrophile, au niveau de sa zone de collecte Z1, peut être traitée avec une solution composée d'un sucre tel que le lactose, le tréhalose ou encore le saccharose qui, en se dissolvant lors de l'élution, facilite l'entrainement des particules collectées par le liquide d'élution L.

La membrane M finale obtenue peut être découpée aux dimensions souhaitées, afin de s'adapter à la géométrie du collecteur électrostatique.

La figure 3 montre un premier exemple de réalisation dans lequel la membrane M de collecte se présente sous la forme d'une chaussette. Sur cette réalisation, la membrane M ne comporte pas la zone terminale Z5. Les autres zones Z1 à Z4 sont réalisées sur la membrane de la manière décrite ci-dessus.

La figure 4 montre un autre exemple de réalisation, dans lequel la membrane M de collecte présente une forme allongée suivant un axe longitudinal. Les différentes zones sont juxtaposées le long de l'axe de la membrane. La membrane M est configurée de manière à présenter la zone Z3 à une première extrémité. Celle-ci est prolongée par la zone Z4 formant la zone barrière. La zone Z4 est prolongée de la zone Z2, qui correspond à la zone de mouillage et d'introduction du liquide d'élution. La zone Z2 est prolongée de la zone Z1 qui est destinée à la collecte des particules. La membrane se termine à son autre extrémité par la zone Z5.

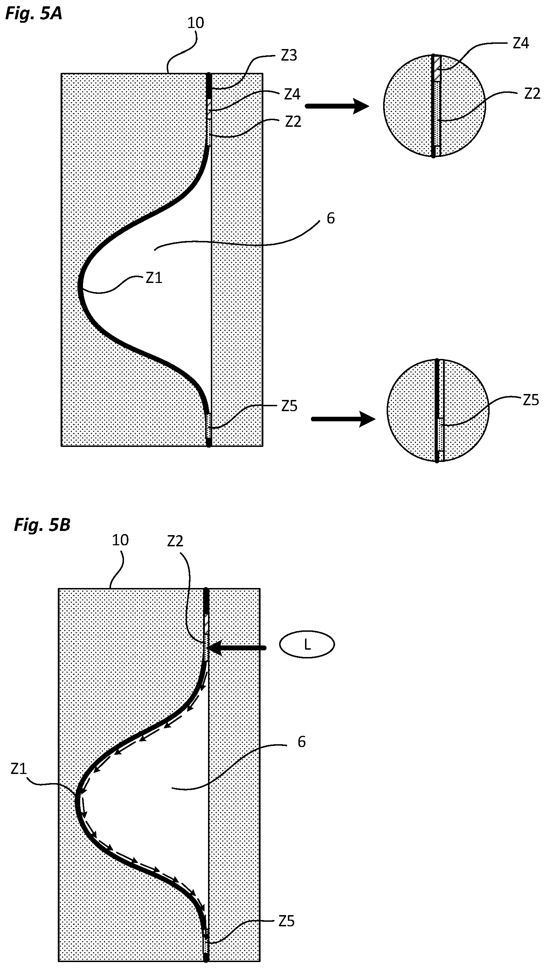

La figure 5A illustre le principe de positionnement de la membrane M de collecte dans son logement. Elle est ainsi maintenue entre deux plaques du composant 10, et vient tapisser au moins partiellement la section transversale du canal de collecte 6 formé par l'assemblage des deux plaques.

La membrane est maintenue par compression d'un côté au niveau de ses zones Z3, Z4 et Z2 et du côté opposé par sa zone Z5. La zone de collecte Z1 est alors agencée pour venir épouser une surface en creux du canal 6.

Au niveau de la zone Z2 et de la zone Z5, par lesquelles le liquide est amené à circuler, la compression est partielle de façon à ne pas bloquer l'écoulement, tout en formant un obstacle qui contraint le liquide en écoulement à passer à travers ces deux zones de migration sous la forme d'un film d'une épaisseur imposée. Cette configuration évite tout risque de ruissellement selon des chemins préférentiels notamment en entrée (sur la zone Z2), où le liquide arrive sous pression.

Ces zones Z2 et Z5 apportent également de la robustesse mécanique en plaquant la membrane dans la bonne position, là où les extrémités ont tendance à se soulever pa rapport au composant.

La figure 5B illustre le principe d'écoulement du liquide dans la membrane, lors de l'élution des particules collectées. On peut voir que la compression ajustée de la membrane au niveau de la zone Z2 aide à la création d'un film capillaire jusqu'à la zone Z5. La compression adaptée de la zone Z5 permet de créer un écoulement régulier en sortie, et d'éviter la formation de gouttes.

Il faut noter que des tests d'inhibitions ont été menés pour confirmer la compatibilité de l'invention avec les réactions biomoléculaires. Pour cela, des échantillons de membranes faites de papier Whatman, poudre de carbone sous sa forme graphite et silicone ont été mis en présence d'un mix réactionnel. Ce mix a ensuite été prélevé et une réaction d'amplification biomoléculaire a été réalisée. Les résultats montrent un léger retard d'apparition par rapport aux contrôles mais une excellente reproductibilité des résultats, ceci indépendamment de l'état de vieillissement de la membrane. Le type de membrane proposée ne semble donc pas entraîner d'inhibition de la réaction biomoléculaire.

La membrane M de l'invention est ainsi apte à assurer la collecte de particules P aéroportées et leur élution. Elle présente aussi les caractéristiques et avantages suivants :
- Elle permet un haut rendement de récupération des particules P après élution, grâce notamment à un fort degré de mouillabilité et à la présence de faibles volumes morts ;
- Elle est compatible avec des réactifs biologiques, permettant ainsi de mettre en œuvre des réactions de type biochimique (par exemple PCR pour "Polymerase Chain Reaction", LAMP ou équivalent).
- La membrane M dispose d'une taille comparable aux dimensions caractéristiques de la veine d'air, assurant une collecte efficace sans nécessité d'ajout de flux ou d'une électrode à géométrie complexe ;
- La membrane M est adaptée pour la mise en œuvre d'une collecte à sec ;
- Elle dispose d'une bonne tenue mécanique ;
- Elle est suffisamment souple pour venir s'insérer dans des collecteurs électrostatiques de formes variées ;
- Elle est facile à réaliser et à mettre en forme, avec notamment des bords conçus pour ne pas provoquer d'effet de pointe ;

## Revendications

1. Membrane (M) de collecte de particules aéroportées, ladite membrane se présentant sous la forme d'une bande composée de :
- Une matrice (40) formée d'un mélange d'un matériau polymère et d'une charge (41) réalisée dans un matériau conducteur de l'électricité,
- Une couche hydrophile (3) de collecte des particules sur laquelle est déposée ladite matrice de manière à former au moins une couche de matériau composite (400),
- Ladite membrane comportant au moins une zone obtenue par un traitement de surface de ladite couche (3) hydrophile.

2. Membrane selon la revendication 1, **caractérisée en ce que** la couche hydrophile (3) est réalisée à base de cellulose.

3. Membrane selon la revendication 1, **caractérisée en ce que** la couche hydrophile (3) est réalisée à base d'un matériau tissé.

4. Membrane selon l'une des revendications 1 à 3, **caractérisée en ce que** la couche hydrophile (3) est réalisée à base d'un matériau qui retient par capillarité un volume inférieur à 30µl/cm².

5. Membrane selon l'une des revendications 1 à 4, **caractérisée en ce que** la matrice (40) est réalisée dans un matériau à base de silicone.

6. Membrane selon l'une des revendications 1 à 5, **caractérisé en ce que** la charge (41) se présente sous la forme d'une poudre de carbone, mélangée à ladite matrice (40).

7. Membrane selon l'une des revendications 1 à 6, **caractérisé en ce que** la charge (41) se présente sous la forme d'une poudre de carbone sous sa forme graphite.

8. Membrane selon l'une des revendications 1 à 7, **caractérisée en ce que** la couche hydrophile (3) présente une surface totale et comporte au moins une première zone dite de collecte (Z1) obtenue par ledit traitement de surface sur une première partie de sa surface totale et au moins une deuxième zone (Z2) réalisée sur une deuxième partie de sa surface totale, la première couche ayant une première épaisseur sur sa zone de collecte et une deuxième épaisseur sur sa deuxième zone, ladite première épaisseur étant inférieure à la deuxième épaisseur.

9. Membrane selon la revendication 8, **caractérisée en ce que** la couche hydrophile (3) est traitée pour former une zone de reprise de contact électrique (Z3) de surface inférieure à sa surface totale, obtenue par ledit traitement de surface de ladite couche hydrophile (3) sur une épaisseur égale à son épaisseur totale.

10. Membrane selon la revendication 9, **caractérisée en ce que** la deuxième zone (Z2) est une zone dite de mouillage, plus hydrophile que la première zone de collecte (Z1).

11. Membrane selon la revendication 10, **caractérisée en ce que** la zone de mouillage (Z2) est réalisée sans traitement de surface de ladite couche hydrophile (3).

12. Membrane selon la revendication 10 ou 11, **caractérisée en ce qu'**elle comporte une zone barrière hydrophobe (Z4) réalisée entre la zone reprise de contact (Z3) et la zone de mouillage (Z2).

13. Membrane selon la revendication 12, **caractérisée en ce que** la zone barrière hydrophobe est réalisée sous la forme d'un dépôt de paraffine.

14. Membrane selon l'une des revendications 10 à 13, **caractérisée en ce qu'**elle comporte une autre zone, dite zone terminale (Z5) située à l'opposé de la zone de mouillage (Z2) par rapport à la zone de collecte (Z1) et obtenue sans traitement de surface de la couche hydrophile (3).

15. Membrane selon l'une des revendications 1 à 14, **caractérisée en ce qu'**elle comporte une couche hydrosoluble déposée sur la couche hydrophile (3).

16. Procédé de fabrication de la membrane (M) de collecte telle que définie dans l'une des revendications 1 à 15, le procédé comportant des étapes de :
- Formation d'un support formé de ladite couche hydrophile (3),
- Dépôt sur ledit support de la matrice (40) formée d'un mélange du matériau polymère et de la charge réalisée dans le matériau conducteur de l'électricité,
- Polymérisation du matériau polymère,
- Traitement de surface de la couche de matériau hydrophile, afin de former ladite zone.

17. Collecteur électrostatique de particules aéroportées, comprenant une unité de collecte (U1), des moyens de collecte (2) configurés pour forcer lesdites particules aéroportées vers ladite unité de collecte (U1), **caractérisé en ce que** l'unité de collecte (U1) intègre une membrane de collecte telle que celle définie dans l'une des revendications 1 à 15.

18. Collecteur électrostatique selon la revendication 17, **caractérisé en ce qu'**il comporte un circuit fluidique d'élution des particules aéroportées collectées par la membrane de collecte, ledit circuit fluidique d'élution comportant au moins un canal fluidique (11) débouchant sur ladite membrane de collecte (M).

19. Collecteur électrostatique selon la revendication 17 ou 18, **caractérisé en ce qu'**il comporte un composant dans lequel est réalisé un canal de collecte (6) des particules et **en ce que** la membrane (M) de collecte est agencée pour tapisser au moins partiellement ledit canal de collecte (6).

20. Collecteur électrostatique selon la revendication 19, **caractérisé en ce que** la membrane (M) de collecte comporte :
- Au moins une première zone dite de collecte (Z1) obtenue par ledit traitement de surface sur une première partie de sa surface totale,
- Au moins une deuxième zone (Z2), dite de mouillage, plus hydrophile que la première zone de collecte (Z1),
- Une zone de reprise de contact électrique (Z3), obtenue par ledit traitement de surface de ladite couche hydrophile (3) sur une épaisseur égale à son épaisseur totale, Une zone dite terminale (Z5) située à l'opposé de la zone de mouillage (Z2) par rapport à la zone de collecte (Z1),
- La membrane de collecte étant comprimée de manière partielle au niveau de sa zone de mouillage (Z2) et de sa zone terminale (Z5) entre deux plaques du composant (10) assemblées entre elles pour former ledit canal de collecte (6).

## Patentansprüche

1. Membran (M) zum Sammeln von luftgetragenen Partikeln, wobei die Membran in Form eines Streifens vorliegt, der aus Folgendem besteht:
- Einer Matrix (40), die aus einer Mischung eines Polymermaterial und einer Ladung (41), die aus einem Elektrizität leitenden Material ausgeführt ist, gebildet wird,
- Einer hydrophilen Schicht (3) zum Sammeln der Partikel, auf welche die Matrix aufgebracht ist, so dass mindestens eine Verbundmaterialschicht (400) gebildet wird,
- Wobei die Membran mindestens eine Zone umfasst, die durch eine Oberflächenbehandlung der hydrophilen Schicht (3) erhalten wird.

2. Membran nach Anspruch 1, **dadurch gekennzeichnet, dass** die hydrophile Schicht (3) auf Basis von Cellulose ausgeführt ist.

3. Membran nach Anspruch 1, **dadurch gekennzeichnet, dass** die hydrophile Schicht (3) auf Basis eines gewebten Materials ausgeführt ist.

4. Membran nach einem der Ansprüche 1 bis 3, **dadurch gekennzeichnet, dass** die hydrophile Schicht (3) auf Basis eines Materials ausgeführt ist, das durch Kapillarität ein Volumen von weniger als 30 µl/cm² zurückhält.

5. Membran nach einem der Ansprüche 1 bis 4, **dadurch gekennzeichnet, dass** die Matrix (40) aus einem Material auf Basis von Silikon ausgeführt ist.

6. Membran nach einem der Ansprüche 1 bis 5, **dadurch gekennzeichnet, dass** die Ladung (41) in Form eines Pulvers aus Kohlenstoff vorliegt, das mit der Matrix (40) gemischt ist.

7. Membran nach einem der Ansprüche 1 bis 6, **dadurch gekennzeichnet, dass** die Ladung (41) in Form eines Pulvers aus Kohlenstoff in seiner Graphitform vorliegt.

8. Membran nach einem der Ansprüche 1 bis 7, **dadurch gekennzeichnet, dass** die hydrophile Schicht (3) eine Gesamtfläche aufweist und mindestens eine erste Zone, Sammelzone (Z1) genannt, die durch die Oberflächenbehandlung auf einem ersten Teil ihrer Gesamtfläche erhalten wird, und mindestens eine zweite Zone (Z2), die auf einem zweiten Teil ihrer Gesamtfläche ausgeführt ist, umfasst, wobei die erste Schicht eine erste Dicke in ihrer Sammelzone und eine zweite Dicke in ihrer zweiten Zone hat, wobei die erste Dicke geringer als die zweite Dicke ist.

9. Membran nach Anspruch 8, **dadurch gekennzeichnet, dass** die hydrophile Schicht (3) behandelt wird, um eine Zone zur Wiederherstellung von elektrischem Kontakt (Z3) mit einer geringeren als ihre Gesamtfläche zu bilden, die durch die Oberflächenbehandlung der hydrophilen Schicht (3) über eine Dicke gleich ihrer Gesamtdicke erhalten wird.

10. Membran nach Anspruch 9, **dadurch gekennzeichnet, dass** die zweite Zone (Z2) eine sogenannte Benetzungszone ist, die hydrophiler als die erste Sammelzone (Z1) ist.

11. Membran nach Anspruch 10, **dadurch gekennzeichnet, dass** die Benetzungszone (Z2) ohne Oberflächenbehandlung der hydrophilen Schicht (3) ausgeführt wird.

12. Membran nach Anspruch 10 oder 11, **dadurch gekennzeichnet, dass** sie eine hydrophobe Barrierezone (Z4) umfasst, die zwischen der Kontaktwiederherstellungszone (Z3) und der Benetzungszone (Z2) ausgeführt ist.

13. Membran nach Anspruch 12, **dadurch gekennzeichnet, dass** die hydrophobe Barrierezone in Form eines Paraffinauftrags ausgeführt ist.

14. Membran nach einem der Ansprüche 10 bis 13, **dadurch gekennzeichnet, dass** sie eine weitere Zone, Endzone (Z5) genannt, umfasst, die entgegengesetzt zu der Benetzungszone (Z2) in Bezug auf die Sammelzone (Z1) gelegen ist und ohne Oberflächenbehandlung der hydrophilen Schicht (3) erhalten wird.

15. Membran nach einem der Ansprüche 1 bis 14, **dadurch gekennzeichnet, dass** sie eine wasserlösliche Schicht umfasst, die auf die hydrophile Schicht (3) aufgebracht ist.

16. Verfahren zur Herstellung der wie in einem der Ansprüche 1 bis 15 definierten Membran (M) zum Sammeln, wobei das Verfahren die folgenden Schritte umfasst:
- Bilden eines Trägers, der aus der hydrophilen Schicht (3) gebildet wird,
- Aufbringen der Matrix (40), die aus einer Mischung des Polymermaterials und der Ladung, die aus dem Elektrizität leitenden Material ausgeführt ist, gebildet wird, auf den Träger,
- Polymerisation des Polymermaterials,
- Oberflächenbehandlung der Schicht aus hydrophilem Material zum Bilden der Zone.

17. Elektrostatischer Kollektor für luftgetragene Partikel, umfassend eine Sammeleinheit (U1), Sammelmittel (2), die dazu ausgestaltet sind, die luftgeführten Partikel zu der Sammeleinheit (U1) zu zwingen, **dadurch gekennzeichnet, dass** die Sammeleinheit (U1) eine wie in einem der Ansprüche 1 bis 15 definierte Membran zum Sammeln beinhaltet.

18. Elektrostatischer Kollektor nach Anspruch 17, **dadurch gekennzeichnet, dass** er einen Elutionsfluidkreis zum Eluieren der von der Membran zum Sammeln gesammelten luftgeführten Partikel umfasst, wobei der Elutionsfluidkreis mindestens einen Fluidkanal (11) umfasst, der auf der Membran zum Sammeln (M) mündet.

19. Elektrostatischer Kollektor nach Anspruch 17 oder 18, **dadurch gekennzeichnet, dass** er eine Komponente umfasst, in der ein Sammelkanal (6) für die Partikel ausgeführt ist, und dass die Membran (M) zum Sammeln dazu gestaltet ist, den Sammelkanal (6) mindestens teilweise zu bedecken.

20. Elektrostatischer Kollektor nach Anspruch 19, **dadurch gekennzeichnet, dass** die Membran (M) zum Sammeln umfasst:
- Mindestens eine erste Zone, Sammelzone (Z1) genannt, die durch die Oberflächenbehandlung auf einem ersten Teil ihrer Gesamtfläche erhalten wird,
- Mindestens eine zweite Zone, Benetzungszone (Z2) genannt, die hydrophiler als die erste Sammelzone (Z1) ist,
- Eine Zone zur Wiederherstellung von elektrischem Kontakt (Z3), die durch die Oberflächenbehandlung der hydrophilen Schicht (3) über eine Dicke gleich ihrer Gesamtdicke erhalten wird, Eine sogenannte Endzone (Z5), die entgegengesetzt zu der Benetzungszone (Z2) in Bezug auf die Sammelzone (Z1) angeordnet ist,
- Wobei die Membran zum Sammeln an ihrer Benetzungszone (Z2) und ihrer Endzone (Z5) teilweise zwischen zwei Platten der Komponente (10) komprimiert wird, die zusammengefügt sind, um den Sammelkanal (6) zu bilden.

## Claims

1. Membrane (M) for collecting airborne particles, said membrane taking the form of a strip composed of:
- a matrix (40) formed from a mixture of a polymer and of a filler (41) that is made of an electrical conductor,
- a hydrophilic layer (3) for collecting particles, on which layer is deposited said matrix so as to form at least one composite layer (400),
- said membrane comprising at least one region obtained via a surface treatment of said hydrophilic layer (3).

2. Membrane according to Claim 1, **characterized in that** the hydrophilic layer (3) is based on cellulose.

3. Membrane according to Claim 1, **characterized in that** the hydrophilic layer (3) is based on a woven.

4. Membrane according to one of Claims 1 to 3, **characterized in that** the hydrophilic layer (3) is based on a material that holds by capillarity a volume smaller than 30 µl/cm².

5. Membrane according to one of Claims 1 to 4, **characterized in that** the matrix (40) is made from a silicone-based material.

6. Membrane according to one of Claims 1 to 5, **characterized in that** the filler (41) takes the form of a carbon powder, mixed with said matrix (40).

7. Membrane according to one of Claims 1 to 6, **characterized in that** the filler (41) takes the form of a graphite powder.

8. Membrane according to one of Claims 1 to 7, **characterized in that** the hydrophilic layer (3) has a total area and comprises at least a first region, referred to as the collection region (Z1), obtained via said surface treatment in a first portion of its total area and at least a second region (Z2) produced in a second portion of its total area, the first layer having a first thickness in its collection region and a second thickness in its second region, said first thickness being smaller than the second thickness.

9. Membrane according to Claim 8, **characterized in that** the hydrophilic layer (3) is treated to form an electrical contact-redistribution region (Z3) of area smaller than its total area, said region being obtained via said surface treatment of said hydrophilic layer (3) over a thickness equal to its total thickness.

10. Membrane according to Claim 9, **characterized in that** the second region (Z2) is a region referred to as the wetting region, which is more hydrophilic than the collection first region (Z1).

11. Membrane according to Claim 10, **characterized in that** the wetting region (Z2) is produced without surface treatment of said hydrophilic layer (3).

12. Membrane according to Claim 10 or 11, **characterized in that** it comprises a hydrophobic barrier region (Z4) between the contact-redistribution region (Z3) and the wetting region (Z2).

13. Membrane according to Claim 12, **characterized in that** the hydrophobic barrier region takes the form of a deposit of paraffin wax.

14. Membrane according to one of Claims 10 to 13, **characterized in that** it comprises another region, referred to as the end region (Z5), which is located opposite the wetting region (Z2) with respect to the collection region (Z1) and is obtained without surface treatment of the hydrophilic layer (3).

15. Membrane according to one of Claims 1 to 14, **characterized in that** it comprises a hydrosoluble layer deposited on the hydrophilic layer (3).

16. Process for manufacturing the collecting membrane (M) such as defined in one of Claims 1 to 15, the process comprising steps of:
- forming a carrier formed from said hydrophilic layer (3),
- depositing on said carrier the matrix (40) formed from a mixture of the polymer and of the filler made of electrical conductor,
- polymerizing the polymer,
- carrying out a surface treatment on the hydrophilic layer, in order to form said region.

17. Electrostatic precipitator of airborne particles, comprising a collecting unit (U1), and precipitating means (2) configured to force said airborne particles towards said collecting unit (U1), **characterized in that** the collecting unit (U1) incorporates a collecting membrane such as defined in one of Claims 1 to 15.

18. Electrostatic precipitator according to Claim 17, **characterized in that** it comprises a fluidic circuit for eluting the airborne particles collected by the collecting membrane, said eluting fluidic circuit comprising at least one fluidic channel (11) that opens onto said collecting membrane (M).

19. Electrostatic precipitator according to Claim 17 or 18, **characterized in that** it comprises a component in which is produced a channel (6) for collecting the particles and **in that** the collecting membrane (M) is arranged to carpet at least partially said collecting channel (6).

20. Electrostatic precipitator according to Claim 19, **characterized in that** the collecting membrane (M) comprises:
- at least a first region, referred to as the collection region (Z1), obtained via said surface treatment in a first portion of its total area,
- at least a second region (Z2), referred to as the wetting region, which is more hydrophilic than the collection first region (Z1),
- an electrical contact-redistribution region (Z3) obtained via said surface treatment of said hydrophilic layer (3) over a thickness equal to its total thickness, a region, referred to as the end region (Z5), which is located opposite the wetting region (Z2) with respect to the collection region (Z1),
- the collecting membrane being compressed partially in its wetting region (Z2) and in its end region (Z5) between two plates of the component (10), which plates are joined to each other to form said collecting channel (6).
